# EUROPEAN PATENT SPECIFICATION

(11) **EP 2 692 953 B1**
(45) Date of publication and mention of the grant of the patent: **02.05.2018**
(21) Application number: 12763097.8
(22) Date of filing: 29.03.2012
(51) Int. Cl.: E02F 9/22, E02F 9/20, B60L 7/14, B60L 11/00, B60L 1/00, B60L 11/12, B60L 11/18, E02F 9/12, E02F 3/32, B60L 15/20

(54) **SHOVEL**
SCHAUFEL
PELLE

(30) Priority: 30.03.2011 JP 2011076254
(43) Date of publication of application: 05.02.2014
(73) Proprietor: Sumitomo (S.H.I.) Construction Machinery Co., Ltd., Shinagawa-ku Tokyo 141-6025 (JP)
(72) Inventor: SANO, Kiminori, Chiba-shi Chiba 263-0001 (JP); SHIRATANI, Ryuji, Chiba-shi Chiba 263-0001 (JP)
(74) Representative: Hoffmann Eitle
(86) International application number: PCT/JP2012/058479
(87) International publication number: WO 2012/133705

(56) References cited:
- JP-A- 2005 299 102
- JP-A- 2005 344 431
- JP-A- 2010 065 510
- JP-A- 2010 065 510

## Description

### TECHNICAL FIELD

The present invention relates to shovels that use an electric motor to electrically drive a turning body.

### BACKGROUND ART

In general, shovels that perform excavation or the like are provided with a turning body, and the turning body is provided with a boom, an arm, and a bucket for performing excavation. By causing the turning body to turn, the bucket is moved to a position around the shovel. Causing the turning body to turn with a turning hydraulic motor is referred to as hydraulic turning. Furthermore, causing the turning body to turn with a turning electric motor is referred to as electric turning.

In shovels that adopt electric turning, a turning electric motor is freely rotatable and is therefore mechanically braked and held stationary when the turning electric motor is not driven. A brake unit, which applies mechanical braking, keeps the turning body stationary using a frictional force. As a consequence, the brake unit has a problem in that a component that generates a frictional force is subject to wear. When the shovel is in operation, a large external force acts on the turning body. Therefore, the braking force (frictional force) has to be maintained against this large external force. As a consequence, a load applied on the brake unit is so large that part of the brake unit that generates a frictional force is worn out in a short time, thus causing the problem of a short service life of the brake unit.

Therefore, it has been proposed to keep the turning body stationary by subjecting a turning electric motor to zero speed control (see, for example, JP 2005-299102 A Document 1). The zero speed control is control that keeps a turning electric motor constantly driven and maintains the rotational speed at zero by driving the turning electric motor in a reverse direction so that the rotational speed becomes zero, when the turning electric motor is caused to rotate by an external force. Maintaining the rotational speed of the turning electric motor at zero is to prevent the turning electric motor from rotating. Accordingly, the turning body is kept at a fixed position.

A further document referring to a driving device for a working machine is JP 2010-065510 A.

### SUMMARY OF THE INVENTION

### PROBLEMS TO BE SOLVED BY THE INVENTION

According to control that keeps a turning body stationary by subjecting a turning electric motor to zero speed control, the turning electric motor is driven to generate such a turning force as to cancel out an external force applied to the turning body. Therefore, the turning electric motor has to be constantly driven, so that it is necessary to supply electric power to the turning electric motor in order to hold the turning body stationary. Accordingly, a large amount of electric power has to be supplied from an electric energy storage unit to the turning electric motor, so that the state of charge of the electric energy storage device may suddenly lower. Furthermore, this is not preferable in terms of power saving, either, because the turning electric motor consumes electric power not for performing operations but just for braking.

The present invention is made in view of the above-described problems, and has an object of providing a shovel that is capable of keeping a turning body stationary using a brake unit other than mechanical brakes and does not require a large amount of electric power to generate a braking force.

### MEANS FOR SOLVING THE PROBLEMS

According to the present invention, a shovel is provided including the features of claim 1. Further, the present invention refers to a method according to claim 7.

Preferably, the above-described shovel further includes a hydraulic circuit configured to disconnect the intake port and the discharge port of the turning brake hydraulic motor.

Furthermore, the hydraulic circuit may be configured to keep a discharge side of the turning brake hydraulic motor closed, and a connecting and disconnecting device may be provided between the turning body and the turning brake hydraulic motor. The connecting and disconnecting device may be configured to connect the turning brake hydraulic motor to the turning body or the turning electric motor in a state where a turning operation part for turning the turning body is unoperated. Furthermore, the hydraulic circuit may include a switching valve and may be configured to disconnect the intake port and the discharge port of the turning brake hydraulic motor by the switching valve. Furthermore, when a turning operation part for turning the turning body is operated, the intake port and the discharge port of the turning brake hydraulic motor may be connected by the switching valve to form a closed circuit, and when the turning operation part for turning the turning body is unoperated, the intake port and the discharge port of the turning brake hydraulic motor may be disconnected by the switching valve.

### EFFECTS OF THE INVENTION

According to the above-described invention, it is possible to keep a turning body stationary using a brake unit other than mechanical brakes and to prevent a large amount of electric power from being consumed to generate a braking force.

### BRIEF DESCRIPTION OF THE DRAWINGS

FIG. 1 is a side view of a hybrid shovel.
FIG. 2 is a block diagram illustrating a configuration of a drive system of a hybrid shovel according to a first embodiment.
FIG. 3 is a block diagram illustrating a configuration of an electric energy storage system.
FIG. 4 is a block diagram illustrating a configuration of a turning drive system that includes a turning brake hydraulic motor for causing a hydraulic braking force to be generated.
FIG. 5 is a flowchart of a control process in the case of performing operations with the turning of an upper-part turning body being stopped.
FIG. 6 is a block diagram illustrating a configuration of a turning drive system that includes a turning brake hydraulic motor according to a second embodiment of the present invention.
FIG. 7 is a block diagram illustrating a configuration of a drive system of a series hybrid shovel.
FIG. 8 is a block diagram illustrating a configuration of a drive system of an electric shovel.

### DESCRIPTION OF EMBODIMENTS

A description is given, with reference to the drawings, of embodiments of the present invention.

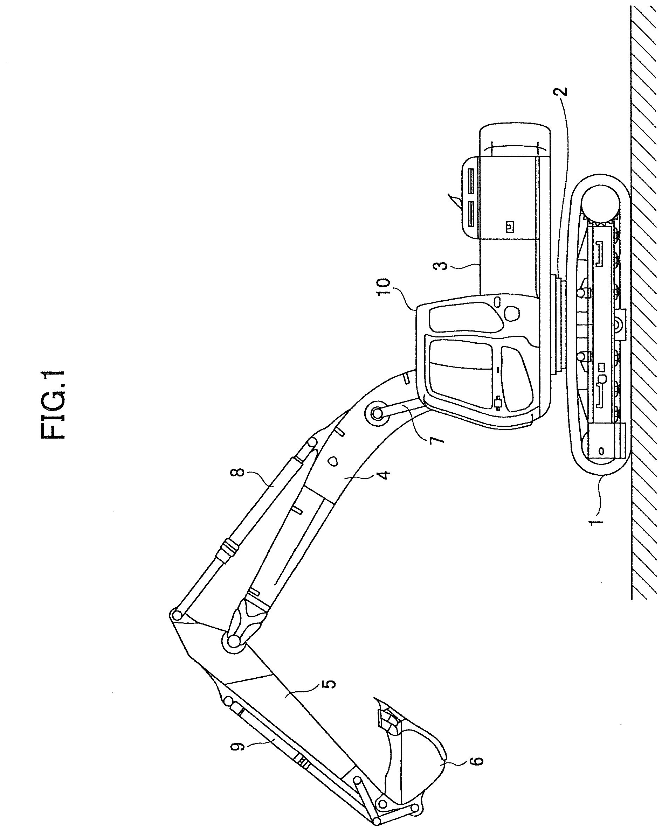

FIG. 1 is a side view illustrating a hybrid shovel to which the present invention is applied.

An upper-part turning body 3 is mounted through a turning mechanism 2 on a lower-part traveling body 1 of the hybrid shovel. A boom 4 is attached to the upper-part turning body 3. An arm 5 is attached to the end of the boom 4. A bucket 6 is attached to the end of the arm 5. The boom 4, the arm 5, and the bucket 6 are hydraulically driven by a boom cylinder 7, an arm cylinder 8, and a bucket cylinder 9, respectively. A cabin 10 and power sources such as an engine are mounted on the upper-part turning body 3.

Shovels to which the present invention may be applied are not limited to hybrid shovels. The present invention may also be applied to any shovels that adopt electric turning, such as electrically driven shovels that are supplied with charging electric power from an external power source.

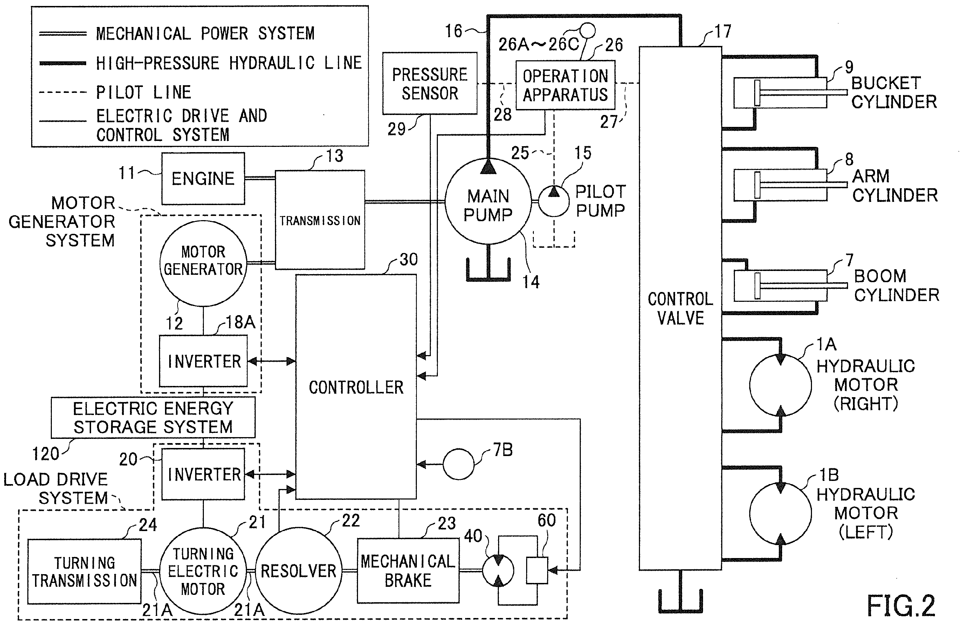

FIG. 2 is a block diagram illustrating a configuration of a drive system of the hybrid shovel according to the first embodiment. In FIG. 2, a mechanical power system, a high-pressure hydraulic line, a pilot line, and an electric drive and control system are indicated by a double line, a bold solid line, a broken line, and a fine solid line, respectively.

An engine 11 as a mechanical drive part and a motor generator 12 as an assist drive part are connected to a first input shaft and a second input shaft, respectively, of a transmission 13. A main pump 14 and a pilot pump 15 are connected as hydraulic pumps to the output shaft of the transmission 13. A control valve 17 is connected to the main pump 14 via a high-pressure hydraulic line 16.

The control valve 17 is a controller configured to control a hydraulic system in the hybrid shovel. Hydraulic motors 1A (right) and 1B (left) for the lower-part traveling body 1, the boom cylinder 7, the arm cylinder 8, and the bucket cylinder 9 are connected to the control valve 17 via high-pressure hydraulic lines.

An electric energy storage system (electric energy storage unit) 120 including a capacitor as an electric energy storage device is connected to the motor generator 12 via an inverter 18A. A turning electric motor 21 as an electric working element is connected to the electric energy storage system 120 via an inverter 20. A resolver 22, a mechanical brake 23, and a turning transmission 24 are connected to a rotation shaft 21A of the turning electric motor 21. Furthermore, an operation apparatus 26 is connected to the pilot pump 15 via a pilot line 25. The turning electric motor 21, the inverter 20, the resolver 22, the mechanical brake 23, and the turning transmission 24 constitute a load drive system. Here, the turning electric motor 21 corresponds to a turning electric motor for turning the upper-part turning body 3, and the mechanical brake 23 corresponds to a brake unit that mechanically brakes the upper-part turning body 3.

The operation apparatus 26 includes a lever 26A, a lever 26B, and a pedal 26C. The lever 26A, the lever 26B, and the pedal 26C are connected to the control valve 17 and a pressure sensor 29 via hydraulic lines 27 and 28, respectively. The pressure sensor 29 is connected to a controller 30 that controls the driving of the electric system of the hybrid shovel.

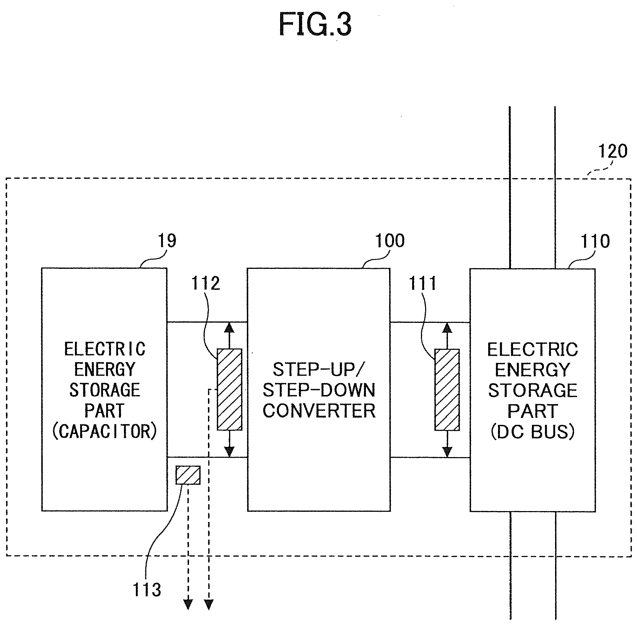

FIG. 3 is a block diagram illustrating the electric energy storage system 120. The electric energy storage system 120 includes a capacitor 19 as an electric energy storage device, a step-up/step-down converter 100, and a DC bus 110. The DC bus 110 as a second electric energy storage device controls the transfer of electric power among the capacitor 19 as a first electric energy storage device, the motor generator 12, and the turning electric motor 21. The capacitor 19 is provided with a capacitor voltage detecting part 112 for detecting a capacitor voltage value and a capacitor electric current detecting part 113 for detecting a capacitor electric current value. The capacitor voltage value and the capacitor electric current value detected by the capacitor voltage detecting part 112 and the capacitor electric current detecting part 113, respectively, are fed to the controller 30.

The step-up/step-down converter 100 performs such control as switching a step-up operation and a step-down operation in accordance with the operating states of the motor generator 12 and the turning electric motor 21, so that the DC bus voltage value falls within a certain range. The DC bus 110 is provided between the inverters 18A and 20 and the step-up/step-down converter 100 to transfer electric power among the capacitor 19, the motor generator 12, and the turning electric motor 21.

Referring back to FIG. 2, the controller 30 is a control unit serving as a main control part that controls the driving of the hybrid shovel. The controller 30 includes a processor including a CPU (Central Processing Unit) and an internal memory. The controller 30 is implemented by the CPU executing a drive control program contained in the internal memory.

The controller 30 converts a signal fed from the pressure sensor 29 into a speed command, and controls the driving of the turning electric motor 21. The signal fed from the pressure sensor 29 corresponds to a signal representing the amount of operation in the case of operating the operation apparatus 26 to turn the turning mechanism 2.

The controller 30 controls the operation (switches the electric motor [assist] operation and the generator operation) of the motor generator 12. The controller 30 also controls the charge and discharge of the capacitor 19 by controlling the driving of the step-up/step-down converter 100 as a step-up/step-down control part. The controller 30 controls the charge and discharge of the capacitor 19 by controlling the switching of the step-up operation and the step-down operation of the step-up/step-down converter 100 based on the state of charge of the capacitor 19, the operating state (electric motor [assist] operation or generator operation) of the motor generator 12, and the operating state (power running operation or regenerative operation) of the turning electric motor 21. The controller 30 also controls the amount of charging (charging electric current or charging electric power) of the capacitor 19 as described below.

This control of the switching of the step-up operation and the step-down operation of the step-up/step-down converter 100 is performed based on the DC bus voltage value detected by a DC bus voltage detecting part 111, the capacitor voltage value detected by the capacitor voltage detecting part 112, and the capacitor electric current value detected by the capacitor electric current detecting part 113.

In the above-described configuration, the electric power generated by the motor generator 12, which is an assist motor, is supplied to the DC bus 110 of the electric energy storage system 120 via the inverter 18A to be supplied to the capacitor 19 via the step-up/step-down converter 100. The electric power regenerated by the regenerative operation of the turning electric motor 21 is supplied to the DC bus 110 of the electric energy storage system 120 via the inverter 20, to be supplied to the capacitor 19 via the step-up/step-down converter 100.

The rotational speed (angular velocity ω) of the turning electric motor 21 is detected by the resolver 22. Furthermore, the angle of the boom 4 (boom angle θB) is detected by a boom angle sensor 7B such as a rotary encoder provided on the support shaft of the boom 4. The controller 30 determines an estimated turning regenerated electric power (energy) by operations based on the angular velocity ω of the turning electric motor 21, and determines an estimated boom regenerated electric power (energy) by operations based on the boom angle θB. Then, the controller 30 determines the anticipated regeneration target value of the SOC by operations based on the estimated turning regenerated electric power and estimated boom regenerated electric power determined by operations. The controller 30 controls the parts of the hybrid shovel so that the SOC of the capacitor 19 approaches the determined anticipated regeneration target value.

The hybrid shovel of the above-described configuration may perform operations such as excavation by driving the boom 4, the arm 5, and the bucket 6 while holding the upper-part turning body 3 at a fixed turning position. In this case, the upper-part turning body 3 is braked by the mechanical brake 23 so as not to be caused to turn by an external force. The mechanical brake 23 is automatically caused to operate in response to the absence of operation of a turning operation lever (for example, the lever 26A) of the operation apparatus 26 for a certain period of time. The mechanical brake 23 is released immediately in response to the operation of the turning operation lever.

This embodiment prevents the occurrence of a state where an operation using the boom 4, the arm 5, or the bucket 6 is performed with the application of the mechanical brake 23. That is, at the time of performing operations with the upper-part turning body 3 being stationary, the mechanical brake 23 is released and a braking force is generated using a hydraulic pressure instead to brake the upper-part turning body 3 into a stationary state. According to this embodiment, for example, a hydraulic pump is used as a hydraulic apparatus for causing a hydraulic braking force to be generated.

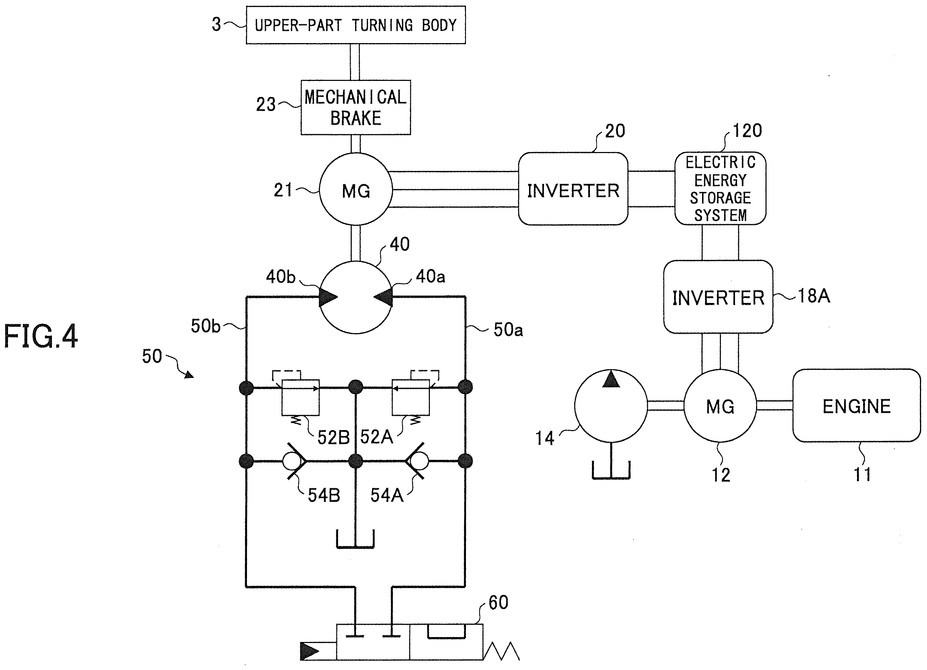

FIG. 4 is a block diagram illustrating a configuration of a turning drive system including a turning brake hydraulic motor for causing a hydraulic braking force to be generated. In FIG. 4, the same components as the components illustrated in FIG. 2 are given the same symbols and their description is omitted.

In this embodiment, the drive shaft of a turning brake hydraulic motor 40 is mechanically connected to the output shaft of the turning electric motor 21. The turning brake hydraulic motor 40 is a hydraulic pump including a port 40a and a port 40b. When the drive shaft of the turning brake hydraulic motor 40 is caused to rotate in one direction, the port 40a serves as an intake port and the port 40b serves as a discharge port so as to cause hydraulic fluid to flow from the port 40a to the direction of the port 40b. When the drive shaft of the turning brake hydraulic motor 40 is caused to rotate in the opposite direction, the port 40b serves as an intake port and the port 40a serves as a discharge port so as to cause hydraulic fluid to flow from the port 40b to the direction of the port 40a.

Here, closing the port 40a and the port 40b to prevent hydraulic fluid from flowing prevents the drive shaft of the turning brake hydraulic motor 40 from rotating. The drive shaft of the turning brake hydraulic motor 40 is mechanically connected to the output shaft of the turning electric motor 21. Therefore, when the drive shaft of the turning brake hydraulic motor 40 is prevented from rotating, the output shaft of the turning electric motor 21 as well is prevented from rotating, so that the upper-part turning body 3 as well is prevented from turning. Accordingly, by preventing hydraulic fluid from flowing by closing the port 40a and the port 40b of the turning brake hydraulic motor 40, the upper-part turning body 3 is braked, so that it is possible to keep the upper-part turning body 3 stationary.

A hydraulic circuit 50 is connected to the turning brake hydraulic motor 40, so that the flow of hydraulic fluid is controlled by the hydraulic circuit 50. The hydraulic circuit 50 includes a switching valve 60. The switching valve 60 performs switching to either a state where a fluid passage 50a connected to the port 40a of the turning brake hydraulic motor 40 and a fluid passage 50b connected to the port 40b of the turning brake hydraulic motor 40 are connected or a state where the fluid passage 50a and the fluid passage 50b are disconnected. The operation of the switching valve 60 is controlled by a switching signal from the controller 30. FIG. 4 illustrates a state where the fluid passage 50a and the fluid passage 50b are disconnected by the switching valve 60. Disconnecting the fluid passage 50a and the fluid passage 50b corresponds to closing the port 40a and the port 40b of the turning brake hydraulic motor 40. Accordingly, by disconnecting the fluid passage 50a and the fluid passage 50b using the switching valve 60, it is possible to brake and keep stationary the upper-part turning body 3.

On the other hand, when the fluid passage 50a and the fluid passage 50b are connected by the switching valve 60, hydraulic fluid that flows from the fluid passage 50a to the port 40a of the turning brake hydraulic motor 40 is taken in into the turning brake hydraulic motor 40 to be discharged from the port 40b. The hydraulic fluid discharged from the port 40b flows through the fluid passage 50b to return again to the switching valve 60, and flows through the fluid passage 50a to be taken in into the port 40a of the turning brake hydraulic motor 40. Thus, by forming a closed circuit by connecting the fluid passage 50a and the fluid passage 50b using the switching valve 60, it is possible to drive the turning brake hydraulic motor 40 in an idling state. In this state, braking by the turning brake hydraulic motor 40 is released, so that the upper-part turning body 3 may be driven to turn. That is, at the time of turning the upper-part turning body 3, the fluid passage 50a and the fluid passage 50b are connected by operating the switching valve 60.

The hydraulic circuit 50 includes relief valves 52A and 52B and check valves 54A and 54B. The relief valves 52A and 52B and the check valves 54A and 54B are provided to release a hydraulic pressure in order to prevent hydraulic pressures inside the fluid passage 50a and the fluid passage 50b from becoming excessively high. For example, when an external force (turning force) acting on the upper-part turning body 3 becomes so large that the hydraulic pressure inside the fluid passage 50b excessively increases to exceed the relief pressure of the relief valve 52B, high-pressure hydraulic fluid flows out from the relief valve 52B to the fluid passage 50a through the check valve 54A. As a result, the hydraulic pressure inside the fluid passage 50b decreases to be maintained at or below the relief pressure of the relief valve 52B. The hydraulic pressure inside the fluid passage 50a is maintained at or below the relief pressure of the relief valve 52A in the same manner when the hydraulic pressure inside the fluid passage 50a excessively increases. Therefore, it is possible to prevent damage to the components of the turning drive system.

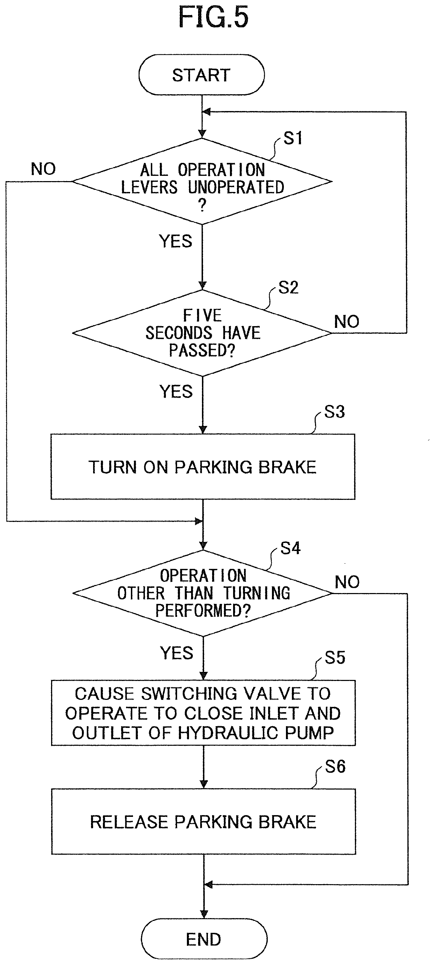

Next, a description is given of control in the case of performing operations with the turning of the upper-part turning body 3 being stopped. FIG. 5 is a flowchart of a control process in the case of performing operations with the turning of the upper-part turning body 3 being stopped.

First, at step S1, it is determined whether all operation levers (operation parts) are unoperated. If it is determined that all operation levers (operation parts) are not unoperated (NO at step S1), the process proceeds to step S4. On the other hand, if it is determined that all operation levers (operation parts) are unoperated (YES at step S1), the process proceeds to step S2, where it is determined whether a predetermined time (for example, five seconds) has passed. During an operation such as excavation or ground leveling, the process proceeds from step S1 to step S4.

If it is determined at step S2 that a predetermined time (for example, five seconds) has not passed, the process returns to step S1. On the other hand, if it is determined at step S2 that a predetermined time (for example, five seconds) has passed, the process proceeds to step S3, where the mechanical brake 23 (a parking brake) is turned ON. That is, when an operation lever for turning the upper-part turning body 3 is not operated for a predetermined time (for example, five seconds), it is determined that the upper-part turning body 3 is to be held stationary, and the mechanical brake 23 is caused to operate to apply braking, so as to hold the upper-part turning body 3 in its position.

Next, at step S4, it is determined whether an operation lever other than the operation lever for turning the upper-part turning body 3 has been operated. If an operation lever other than the operation lever for turning the upper-part turning body 3 has not been operated (NO at step S4), the process of this time ends. The absence of operation of an operation lever other than the operation lever for turning the upper-part turning body 3 means that no other working elements are operated while the upper-part turning body 3 is stationary, either, so that it may be determined that the shovel is doing no operation. Accordingly, the state is maintained where braking is applied by the mechanical brake 23.

On the other hand, if an operation lever other than the operation lever for turning the upper-part turning body 3 has been operated (YES at step S4), the process proceeds to step S5, the switching valve 6 is caused to operate so that the fluid passage 50a and the fluid passage 50b are disconnected (the state illustrated in FIG. 4). That is, when an operation other than the turning of the upper-part turning body 3 has been performed while the upper-part turning body 3 is stationary, it is determined that an operation with the bucket 6 or the like is being performed with the upper-part turning body 3 being stationary, and the drive shaft of the turning brake hydraulic motor 40 is prevented from rotating to brake the upper-part turning body 3. The flow of hydraulic fluid is blocked by disconnecting the fluid passage 50a and the fluid passage 50b, so that the drive shaft of the turning brake hydraulic motor 40 is prevented from rotating. Therefore, the turning electric motor 21 is prevented from rotating, so that the upper-part turning body 3 as well is prevented from turning.

After the application of braking by the turning brake hydraulic motor 40, the operation of the mechanical brake (parking brake) 23 is released at step S6. That is, because braking has been applied by the turning brake hydraulic motor 40, it is possible to keep the upper-part turning body 3 stationary even when the braking applied by the mechanical brake 23 is released. Therefore, the wear of friction parts (for example, a brake lining) of the mechanical brake 23 is prevented, so that it is possible to prevent friction parts of the mechanical brake 23 from being worn early. As a result, it is possible to extend the service life of the mechanical brake 23. Then, after the release of the mechanical brake 23 at step S6, the process is restarted from step S1.

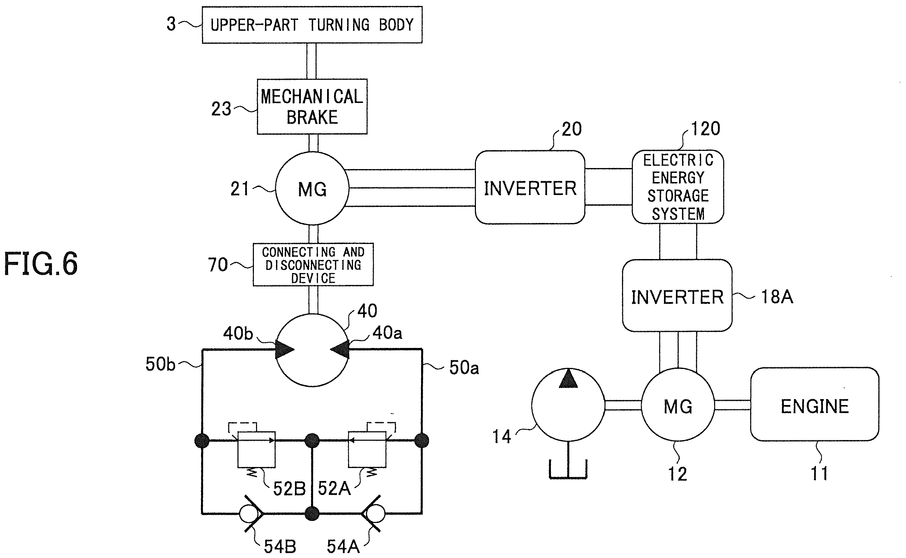

Next, a description is given of a second embodiment. FIG. 6 is a block diagram illustrating a configuration of a turning drive system including a turning brake hydraulic motor according to the second embodiment of the present invention. In FIG. 6, the same components as the components illustrated in FIG. 4 are given the same symbols, and their description is omitted.

As illustrated in FIG. 6, according to this embodiment, the hydraulic circuit 50 does not include the switching valve 60. Accordingly, in the hydraulic circuit 50 illustrated in FIG. 6, the port 40a and the port 40b of the turning brake hydraulic motor 40 are prevented from discharging hydraulic fluid and are kept closed. That is, the turning brake hydraulic motor 40 is kept braked. If the turning brake hydraulic motor 40 remains as it is, the upper-part turning body 3 is prevented from being driven to turn. Therefore, according to this embodiment, in place of the switching valve 60, a connecting and disconnecting device 70 is provided between the turning brake hydraulic motor 40 and the turning electric motor 21.

Like, for example, a clutch, the connecting and disconnecting device 70 allows the transmission of a turning force by engaging two members with each other and prevents the transmission of a turning force by disengaging the two members. That is, the connecting and disconnecting device 70 may connect and disconnect the drive shaft of the turning brake hydraulic motor 40 and the output shaft of the turning electric motor 21 based on a signal from the controller 30. Accordingly, when braking is applied with the turning brake hydraulic motor 40, the drive shaft of the turning brake hydraulic motor 40 and the output shaft of the turning electric motor 21 are connected by the connecting and disconnecting device 70. On the other hand, when the upper-part turning body 3 is driven to turn by driving the turning electric motor 21, the drive shaft of the turning brake hydraulic motor 40 and the output shaft of the turning electric motor 21 are disconnected by the connecting and disconnecting device 70.

Thus, according to this embodiment, the turning brake hydraulic motor 40 is kept braked, and when braking by the turning brake hydraulic motor 40 is unnecessary, this is addressed by disconnecting the turning brake hydraulic motor 40 from the turning electric motor 21.

According to the above-described first and second embodiments, by connecting the turning brake hydraulic motor 40 to the turning electric motor 21, the turning electric motor 21 is braked, so that the upper-part turning body 3 is braked. Alternatively, the turning brake hydraulic motor 40 may be directly connected to the upper-part turning body 3 or the turning mechanism 2.

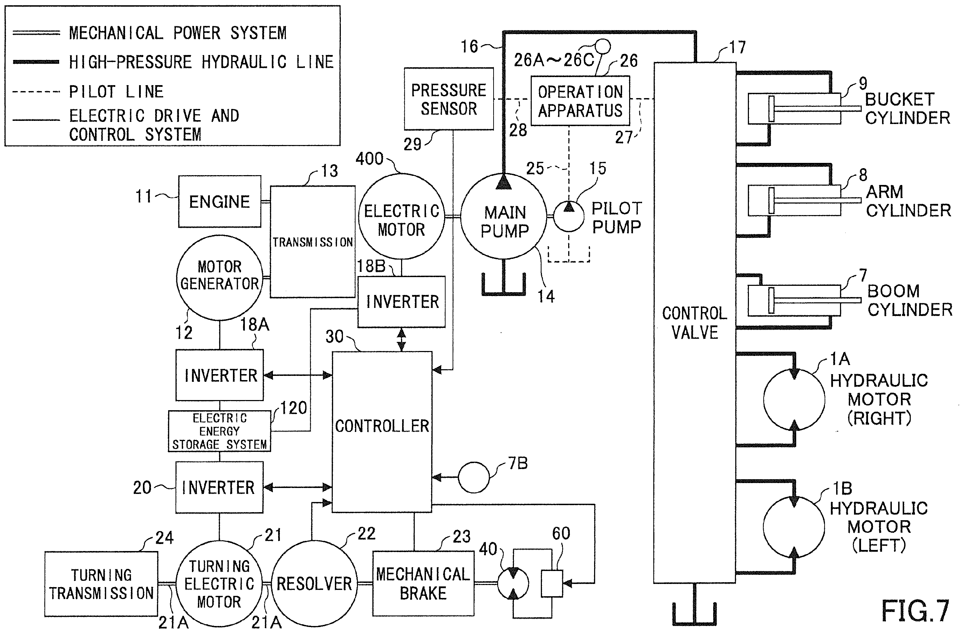

According to the above-described embodiments, a description is given of the case where the present invention is applied to a so-called parallel hybrid shovel, where the engine 11 and the motor generator 12 are connected to the main pump 14, which is a hydraulic pump, and the main pump 14 is driven. Alternatively, the present invention may also be applied to a so-called series hybrid shovel, where the motor generator 12 is driven by the engine 11, electric power generated by the motor generator 12 is stored in the electric energy storage system 120, and the main pump 14 is driven with the stored electric power alone as illustrated in FIG. 7. In this case, the motor generator 12 has a function as a generator that is driven by the engine 11 to perform a generator operation alone. The electric power stored in the electric energy storage system 120 is supplied to an electric motor 400 that drives the main pump 14 through an inverter 18B. When supplied with the electric power, the electric motor 400 is driven, so that the main pump 14 is driven.

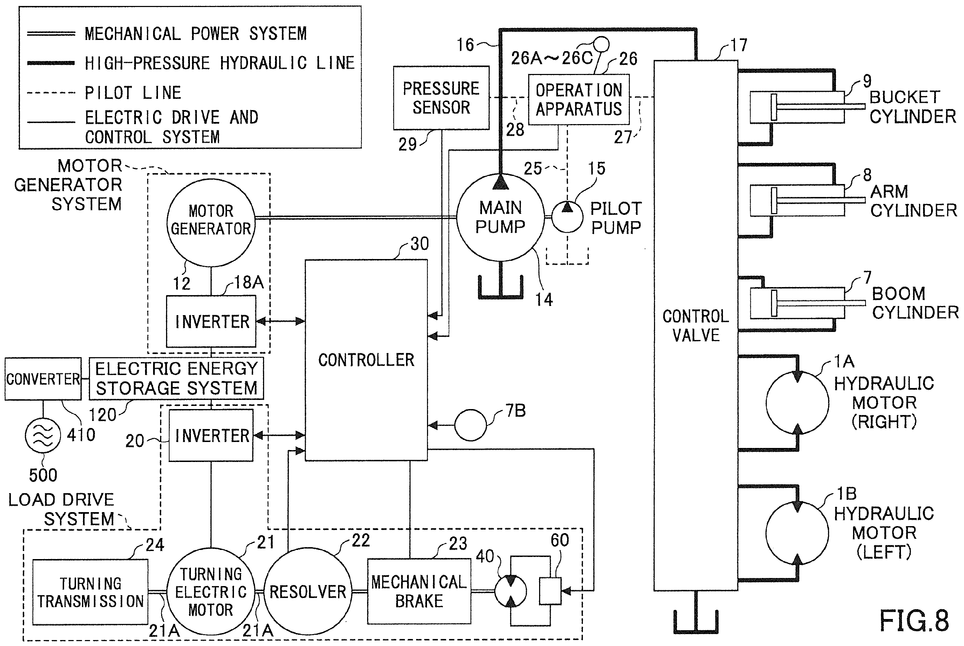

Furthermore, the present invention may also be applied to an electric shovel, where no engine is provided and a hydraulic pump is driven by an electric motor alone. FIG. 8 is a block diagram illustrating a configuration of a drive system of an electric shovel. The motor generator 12 that functions as an electric motor is connected to the main pump 14, and the main pump 14 is driven by the motor generator 12 alone. An external power supply 500 is connected to the electric energy storage system 120 through a converter 410. The electric energy storage part (capacitor 19) of the electric energy storage system 120 is supplied with electric power from the external power supply 500, so that the capacitor 19 is charged.

The present invention is not limited to the specifically disclosed embodiments, and variations and modifications may be made without departing from the scope of the present invention, which is defined by the appended claims. The present application is based upon and claims the benefit of priority of Japanese Patent Application No. 2011-076254, filed on March 30, 2011.

### INDUSTRIAL APPLICABILITY

The present invention may be applied to shovels that use an electric motor to electrically drive a turning body.

### DESCRIPTION OF THE REFERENCE NUMERALS

- 1: lower-part traveling body
- 1A, 1B: hydraulic motor
- 2: turning mechanism
- 3: upper-part turning body
- 4: boom
- 5: arm
- 6: bucket
- 7: boom cylinder
- 7A: hydraulic pipe
- 7B: boom angle sensor
- 8: arm cylinder
- 9: bucket cylinder
- 10: cabin
- 11: engine
- 12: electric motor
- 13: transmission
- 14: main pump
- 15: pilot pump
- 16: high-pressure hydraulic line
- 17: control valve
- 18A, 18B, 20: inverter
- 19: capacitor
- 21: turning electric motor
- 22: resolver
- 23: mechanical brake
- 24: turning transmission
- 25: pilot line
- 26: operation apparatus
- 26A, 26B: lever
- 26C: pedal
- 27: hydraulic line
- 28: hydraulic line
- 29: pressure sensor
- 30: controller
- 35: display unit
- 40: turning brake hydraulic motor
- 50: hydraulic circuit
- 50a, 50b: fluid passage
- 52A, 52B: relief valve
- 54A, 54B: check valve
- 60: switching valve
- 70: connecting and disconnecting device
- 100: step-up/step-down converter
- 110: DC bus
- 111: DC bus voltage detecting part
- 112: capacitor voltage detecting part
- 113: capacitor electric current detecting part
- 120: electric energy storage system
- 400: electric motor
- 410: converter
- 500: external power supply

## Claims

1. A shovel, comprising:
a turning electric motor (21) configured to drive a turning body (3) to turn; and
a turning brake hydraulic motor (40) mechanically connected to the turning body (3) or the turning electric motor (21), **characterized in that**
in a state where a turning operation part (26) for turning the turning body is unoperated, the turning body (3) is braked using the turning brake hydraulic motor (40) and a braking operation of a mechanical brake unit (23) for mechanically holding the turning body (3) stationary is released when an operation part for performing an operation other than turning of the turning body (3) is operated.

2. The shovel as claimed in claim 1, further comprising:
a hydraulic circuit (50) configured to disconnect an intake port (40a) and a discharge port (40b) of the turning brake hydraulic motor (40).

3. The shovel as claimed in claim 2, wherein the hydraulic circuit (50) is configured to keep a discharge side of the turning brake hydraulic motor (40) closed, and a connecting and disconnecting device (70) is provided between the turning body (3) and the turning brake hydraulic motor (40).

4. The shovel as claimed in claim 3, wherein the connecting and disconnecting device is configured to connect the turning brake hydraulic motor (40) to the turning body (3) or the turning electric motor (40) in the state where the turning operation part (26) for turning the turning body (3) is unoperated.

5. The shovel as claimed in claim 2, wherein the hydraulic circuit (50) includes a switching valve (60) and is configured to disconnect the intake port (40a) and the discharge port (40b) of the turning brake hydraulic motor (40) by the switching valve (60).

6. The shovel as claimed in claim 5, wherein
when the turning operation part for turning the turning body (3) is operated, the intake port (40a) and the discharge port (40b) of the turning brake hydraulic motor are connected by the switching valve to form a closed circuit, and
when the turning operation part for turning the turning body is unoperated, the intake port and the discharge port of the turning brake hydraulic motor are disconnected by the switching valve.

7. A method of controlling a shovel comprising:
braking a turning body of the shovel using a turning brake hydraulic motor (40) mechanically connected to the turning body (3) or a turning electric motor (21) configured to drive the turning body (3) to turn, and **characterized by** releasing a braking operation of a mechanical brake unit for mechanically holding the turning body (3) stationary when an operation part for performing an operation other than turning of the turning body is operated in a state where a turning operation part for turning the turning body is unoperated.

8. The method of controlling a shovel as claimed in claim 7, further comprising:
disconnecting an intake port (40a) and a discharge port (40b) of the turning brake hydraulic motor (40) when the turning body (3) is braked using the turning brake hydraulic motor (40).

9. The method of controlling a shovel as claimed in claim 8, further comprising:
keeping a discharge side of the turning brake hydraulic motor (40) closed, and connecting or disconnecting the turning body (3) and the turning brake hydraulic motor (40) by a connecting and disconnecting device (70).

10. The method of controlling a shovel as claimed in claim 9, further comprising:
operating the connecting and disconnecting device (70) to connect the turning brake hydraulic motor (40) to the turning body or the turning electric motor (21) in the state where the turning operation part for turning the turning body (3) is unoperated.

## Patentansprüche

1. Schaufel, umfassend:
einen Dreh-Elektromotor (21), der dazu konfiguriert ist, einen Drehkörper (3) zum Drehen anzutreiben; und
einen Dreh-Bremshydraulikmotor (40), der mechanisch mit dem Drehkörper (3) oder dem Dreh-Elektromotor (21) verbunden ist, **dadurch gekennzeichnet, dass**
in einem Zustand, in dem ein Drehbetätigungsteil (26) zum Drehen des Drehkörpers unbetätigt ist, der Drehkörper (3) unter Verwendung des Dreh-Bremshydraulikmotors (40) gebremst ist und eine Bremsbetätigung einer mechanischen Bremseinheit (23) zum stationären, mechanischen Halten des Drehkörpers (3) gelöst ist, wenn ein Betätigungsteil zum Durchführen einer anderen Betätigung als Drehen des Drehkörpers (3) betätigt ist.

2. Schaufel nach Anspruch 1, weiter umfassend:
einen Hydraulikkreislauf (50), der dazu konfiguriert ist, eine Einlassöffnung (40a) und eine Auslassöffnung (40b) des Dreh-Bremshydraulikmotors (40) zu trennen.

3. Schaufel nach Anspruch 2, wobei der Hydraulikkreislauf (50) dazu konfiguriert ist, eine Auslassseite des Dreh-Bremshydraulikmotors (40) geschlossen zu halten, und eine Verbindungs- und Trennvorrichtung (70) zwischen dem Drehkörper (3) und dem Dreh-Bremshydraulikmotor (40) bereitgestellt ist.

4. Schaufel nach Anspruch 3, wobei die Verbindungs- und Trennvorrichtung dazu konfiguriert ist, den Dreh-Bremshydraulikmotor (40) mit dem Drehkörper (3) oder dem Dreh-Elektromotor (40) zu verbinden, in dem Zustand, in dem das Drehbetätigungsteil (26) zum Drehen des Drehkörpers (3) unbetätigt ist.

5. Schaufel nach Anspruch 2, wobei der Hydraulikkreislauf (50) ein Schaltventil (60) einschließt und dazu konfiguriert ist, die Einlassöffnung (40a) und die Auslassöffnung (40b) des Dreh-Bremshydraulikmotors (40) mittels des Schaltventils (60) zu trennen.

6. Schaufel nach Anspruch 5, wobei,
wenn das Drehbetätigungsteil zum Drehen des Drehkörpers (3) betätigt ist, die Einlassöffnung (40a) und die Auslassöffnung (40b) des Dreh-Bremshydraulikmotors mittels des Schaltventils verbunden sind, um einen geschlossenen Kreislauf zu bilden, und
wenn das Drehbetätigungsteil zum Drehen des Drehkörpers unbetätigt ist, die Einlassöffnung und die Auslassöffnung des Dreh-Bremshydraulikmotors mittels des Schaltventils getrennt sind.

7. Verfahren zur Steuerung einer Schaufel, umfassend:
Bremsen eines Drehkörpers der Schaufel unter Verwendung eines Dreh-Bremshydraulikmotors (40), der mechanisch mit dem Drehkörper (3) oder einem Dreh-Elektromotor (21) verbunden ist, der dazu konfiguriert ist, den Drehkörper (3) zum Drehen anzutreiben, und **gekennzeichnet durch** Lösen einer Bremsbetätigung einer mechanischen Bremseinheit, zum stationären, mechanischen Halten des Drehkörpers (3), wenn ein Betätigungsteil zum Durchführen einer anderen Betätigung als Drehen des Drehkörpers betätigt ist, in einem Zustand, in dem ein Drehbetätigungsteil zum Drehen des Drehkörpers unbetätigt ist.

8. Verfahren zur Steuerung einer Schaufel nach Anspruch 7, weiter umfassend:
Trennen einer Einlassöffnung (40a) und einer Auslassöffnung (40b) des Dreh-Bremshydraulikmotors (40), wenn der Drehkörper (3) unter Verwendung des Dreh-Bremshydraulikmotors (40) gebremst ist.

9. Verfahren zur Steuerung einer Schaufel nach Anspruch 8, weiter umfassend:
Geschlossenhalten einer Auslassseite des Dreh-Bremshydraulikmotors (40), und Verbinden oder Trennen des Drehkörpers (3) und des Dreh-Bremshydraulikmotors (40) mittels einer Verbindungs- und Trennvorrichtung (70).

10. Verfahren zur Steuerung einer Schaufel nach Anspruch 9, weiter umfassend:
Betätigen der Verbindungs- und Trennvorrichtung (70), um den Dreh-Bremshydraulikmotor (40) mit dem Drehkörper oder dem Dreh-Elektromotor (21) zu verbinden in dem Zustand, in dem das Drehbetätigungsteil zum Drehen des Drehkörpers (3) unbetätigt ist.

## Revendications

1. Pelleteuse, comprenant :
un moteur électrique de rotation (21) configuré pour entraîner un corps rotatif (3) en rotation ; et
un moteur hydraulique de freinage de rotation (40) relié mécaniquement au corps rotatif (3) ou au moteur électrique de rotation (21), **caractérisé en ce que**
dans un état où une partie d'actionnement en rotation (26) destinée à entraîner en rotation le corps rotatif n'est pas actionnée, le corps rotatif (3) est freiné en utilisant le moteur hydraulique de freinage de rotation (40) et un actionnement de freinage d'une unité de freinage mécanique (23) destinée à maintenir mécaniquement le corps rotatif (3) stationnaire est libérée lorsqu'une partie d'actionnement destinée à effectuer un actionnement autre qu'une rotation du corps rotatif (3) est actionnée.

2. Pelleteuse selon la revendication 1, comprenant en outre :
un circuit hydraulique (50) configuré pour déconnecter un orifice d'admission (40a) et un orifice d'évacuation (40b) du moteur hydraulique de freinage de rotation (40).

3. Pelleteuse selon la revendication 2, dans laquelle le circuit hydraulique (50) est configuré pour maintenir fermé un côté d'évacuation du moteur hydraulique de freinage de rotation (40), et un dispositif de connexion et de déconnexion (70) est ménagé entre le corps rotatif (3) et le moteur hydraulique de freinage de rotation (40).

4. Pelleteuse selon la revendication 3, dans laquelle le dispositif de connexion et de déconnexion est configuré pour connecter le moteur hydraulique de freinage de rotation (40) au corps rotatif (3) ou au moteur électrique de rotation (40) dans l'état où la partie d'actionnement en rotation (26) pour entraîner en rotation le corps rotatif (3) n'est pas actionnée.

5. Pelleteuse selon la revendication 2, dans laquelle le circuit hydraulique (50) inclut une soupape de commutation (60) et est configuré pour déconnecter l'orifice d'admission (40a) et l'orifice d'évacuation (40b) du moteur hydraulique de freinage de rotation (40) via la soupape de commutation (60).

6. Pelleteuse selon la revendication 5, dans laquelle
lorsque la partie d'actionnement en rotation destinée à entraîner en rotation le corps rotatif (3) est actionnée, l'orifice d'admission (40a) et l'orifice d'évacuation (40b) du moteur hydraulique de freinage de rotation sont connectés via la soupape de commutation pour former un circuit fermé, et
lorsque la partie d'actionnement en rotation destinée à entraîner en rotation le corps rotatif n'est pas actionnée, l'orifice d'admission et l'orifice d'évacuation du moteur hydraulique du freinage de rotation sont déconnectés via la soupape de commutation.

7. Procédé de commande d'une pelleteuse comprenant :
le freinage d'un corps rotatif de la pelleteuse à l'aide d'un moteur hydraulique de freinage de rotation (40) relié mécaniquement au corps rotatif (3) ou à un moteur électrique de rotation (21) configuré pour entraîner en rotation le corps rotatif (3), et **caractérisé par** la libération d'un actionnement de freinage d'une unité de freinage mécanique pour maintenir mécaniquement le corps rotatif (3) stationnaire lorsqu'une partie d'actionnement destinée à effectuer un actionnement autre qu'une rotation du corps rotatif est actionnée dans un état où une partie d'actionnement en rotation destinée à entraîner en rotation le corps rotatif n'est pas actionnée.

8. Procédé de commande d'une pelleteuse selon la revendication 7, comprenant en outre :
la déconnexion d'un orifice d'admission (40a) et d'un orifice d'évacuation (40b) du moteur hydraulique de freinage de rotation (40) lorsque le corps rotatif (3) est freiné en utilisant le moteur hydraulique de frein de rotation (40).

9. Procédé de commande d'une pelleteuse selon la revendication 8, comprenant en outre :
le maintien fermé d'un côté d'évacuation du moteur hydraulique de freinage de rotation (40), et la connexion ou la déconnexion du corps rotatif (3) et du moteur hydraulique de freinage de rotation (40) via un dispositif de connexion et de déconnexion (70).

10. Procédé de commande d'une pelleteuse selon la revendication 9, comprenant en outre :
l'actionnement du dispositif de connexion et de déconnexion (70) pour connecter le moteur hydraulique de freinage de rotation (40) au corps rotatif ou au moteur électrique de rotation (21) dans l'état où la partie d'actionnement en rotation du corps rotatif (3) n'est pas actionnée.
